# EUROPEAN PATENT APPLICATION

(11) **EP 4 663 270 A1**
(43) Date of publication of application: **17.12.2025**
(21) Application number: 24182186.7
(22) Date of filing: 14.06.2024
(51) Int. Cl.: B01D 53/02, B01D 53/04, B01D 53/26

(54) **SAFETY ELEMENT, CLEAN AIR DUCT AND CATHODE AIR FILTER OF FUEL CELL SYSTEM**

(71) Applicant: MANN+HUMMEL GmbH, 71636 Ludwigsburg (DE)
(72) Inventor: SPELTER, Lars, 71636 Ludwigsburg (DE); LEININGER, Simon, 71636 Ludwigsburg (DE)
(74) Representative: Mann + Hummel Intellectual Property

(57) **Abstract**

A safety element (100) includes a housing (10), and a filler material (18) comprising a superadsorber (20) and/or an ion exchange resin (30) disposed in a first segment (12) of the housing (10) and configured to remove acidic or non-acidic water, the filler material (18) having a volume depending on an interaction with water when exposed to water or not exposed to water.

## Description

### Technical Field

Embodiments relate to a safety element, a clean air duct of a cathode air filter of a fuel cell system with a safety element and a cathode air filter of a fuel cell system with a clean air duct with a safety element.

### Background Art

A clean air duct of a fuel cell system serves for providing a cathode of the fuel cell with air. Cathode air filters in the clean air duct are used for cleaning the air in order to protect the sensitive fuel cell system.

US 2009/0311575 A1 discloses a fuel cell comprising an anode and cathode, fuel delivery means comprising a superabsorbent nonwoven absorbent media in fluid contact with a wicking material, gas-liquid separation means, and water management means. In one embodiment, the fuel cell also uses a microporous membrane, a wicking material, and an absorbent material to provide for gas-liquid separation, and a wicking material and absorbent material to provide for liquid management means at the cathode. The combination of materials provides the advantage of passive operation and orientation independence for the fuel cell.

US 2019/0214659 A1 discloses a fuel cell comprising any seal selected from a group consisting of seals between adjacent separators in the fuel cell and seals between a frame and an electrolyte membrane or an electrolyte membrane electrode assembly in the fuel cell, wherein the any seal contains a cured product which is formed by curing a curable polymer resin composition.

### Summary

An object of the embodiments is to provide a safety element.

A further object of the embodiments is to provide a clean air duct of a cathode air filter of a fuel cell system with a safety element.

A further object of the embodiments is to provide a cathode air filter of a fuel cell system with a clean air duct with a safety element.

According to an aspect of the embodiments the object is achieved by a safety element comprising a housing; a filler material comprising a superadsorber and/or an ion exchange resin disposed in a first segment of the housing and configured to remove acidic or non-acidic water, the filler material having a volume depending on an interaction with water when exposed to water or not exposed to water; a compressible element disposed in a second segment of the housing; a piston interposed between the filler material and the compressible element; and a sensor configured to sense a movement of the piston when the volume of the filler material changes, and to indicate a replacement of the filler material when the movement of the piston is sensed and is greater than or equal to a defined threshold value.

According to a further aspect of the embodiments the further object is achieved by a clean air duct of a cathode air filter of a fuel cell system, the clean air duct comprising the safety element.

According to a further aspect of the embodiments the further object is achieved by a cathode air filter of a fuel cell system, the cathode air filter comprising a clean air duct; and the safety element.

Advantageous embodiments are described in the dependent claims, the description and the drawings.

According to an aspect of the embodiments a safety element is proposed, comprising a housing; a filler material comprising a superadsorber and/or an ion exchange resin disposed in a first segment of the housing and configured to remove acidic or non-acidic water, the filler material having a volume depending on an interaction with water when exposed to water or not exposed to water; a compressible element disposed in a second segment of the housing; a piston interposed between the filler material and the compressible element; and a sensor configured to sense a movement of the piston when the volume of the filler material changes, and to indicate a replacement of the filler material when the movement of the piston is sensed and is greater than or equal to a defined threshold value.

The proposed safety element is intended for use in a clean air duct of cathode air of a fuel cell system and prevents damage to the fuel cell system that can occur due to the entry of acidic water.

The safety element comprises a filler material comprising an ion exchanger resin and/or a superadsorber that is surrounded by a suitable housing and installed in the lower part of an air filter housing on the clean side or in the clean air duct of an air filter element. Due to the positioning, water that has penetrated the air filter element in liquid form comes into contact with the filler material.

Water is critical for the fuel cell, especially if it contains Cl- ions. The Cl-ions come from the NaCl, which is used as road salt in winter. The road salt then enters the air filter system in the form of spray. When this salty solution passes through, it comes into contact with the cation exchanger of the adsorber bellows of the filter element. The cation exchanger has the task of adsorbing harmful gases, in particular NH3, in order to prevent damage to the fuel cell. In contact with NaCl, Na+ is exchanged in conjunction with water, leaving Cl- behind. The Cl- influences the pH value through the formation of HCl (the pH value may drop to 1 to 2). If the amount of water is sufficiently high, it can pass through the filter element in liquid form and cause considerable damage to the fuel cell if the pH value is low.

If the filler material is an ion exchange resin, harmful ions (CI-) that are contained in the water, can be removed by the ion exchange resin to prevent damage to the fuel cell.

There are different ion exchange resins available that either shrink or swell when Cl- ions are absorbed. A first type shrinks when Cl- ions are absorbed, whereas a second type swells when Cl- ions are absorbed.

Comprising the ion exchange resin in the housing enables to detect two effects that occur in contact with water. In general, an ion exchange resin expands on contact with water by absorbing water. This expansion can, but does not have to be detected. Depending on the type of ion exchange resin, the volume of the ion exchange resin can also increase or decrease.

Therefore, a distinction may be made between first type and second type ion exchange resin.

The first type ion exchanger exchanges OH- with Cl- which results in a significant shrinkage (> 15 %), which may be detected. This makes it possible to indicate the status to the driver of the vehicle or user of the fuel cell, to switch off the fuel cell as quickly as possible in order to avoid damage.

The second type ion exchanger exchanges HCO3- with Cl- which results in a significant swelling (> 15 %), which leads to a further, additional increase in volume, which may be detected. This makes it possible to indicate the status to the driver of the vehicle or user of the fuel cell, to switch off the fuel cell as quickly as possible in order to prevent damage.

The ion exchanger resin may be replaced in a similar way to the filter element as a service part. If no shrinkage is detected, the ion exchanger resin can also be used over several filter element replacement intervals without replacement, depending on the service plan.

If the filler material is a superadsorber, the housing in a similar manner enables to detect the swelling of the superabsorber that occurs in contact with water. The water is bound in the superabsorber and cannot enter the fuel cell. The fault is displayed to the user of the fuel cell so that operation can be stopped as quickly as possible.

The superabsorber is replaced in a similar way to the filter element (service section). If no swelling has been detected, the superabsorber can also be used over several filter element replacement intervals without replacement, depending on the service schedule.

In the event of a heavy build-up of salt water (winter driving) and the resulting acidic water, the ions can be removed, and the critical status transmitted to the user. This prevents the very complex and expensive fuel cell from failing. The detection of swelling of the filler material enables the user to be notified so that operation can be stopped as quickly as possible. Operation may be stopped also automatically, depending on the application.

Using ion exchange resin as a filler material, at the same time, water that is not contaminated with Cl- is absorbed and passed on with a time delay. This means that the safety element can continue to be used despite the presence of water.

This is a decisive advantage in contrast to the use of superabsorbers, for example, which do not regenerate and always exhibit swelling behavior depending on the amount of water. The second type ion exchanger only swells to its maximum volume when Cl- ions are present, which can be detected. Superadsorbers as a filler material on the other hand are cheaper but efficiency may be different.

According to the embodiments, the sensor may comprise optical and/or electronic means for sensing the movement of the piston and/or for indicating the replacement of the filler material. The optical and/or electronic means may advantageously serve as a service indicator to advise exchange of the filler material of the safety element.

According to the embodiments, the sensor may be configured to indicate the replacement of the filler material outside the housing. Thus, the service indicator may be read out without opening of the housing.

According to the embodiments, the compressible element may be a spring element or a non-woven element. Avoid in the housing may advantageously be filled with a compressible non-woven element or a spring element loaded.

According to the embodiments, the compressible element may be loaded in an initial state of the filler material. Thus, also shrinking of the filler material may be detectable.

According to a favorable embodiment of the safety element, the superadsorber may comprise an anion exchange material.

According to the embodiments, the ion exchange resin may comprise an OH- ion exchange material or an HCO3- ion exchange material. Thus, efficient operation of the safety element may be achieved protecting the fuel cell system from being damaged.

According to a further aspect of the embodiments a clean air duct of a cathode air filter of a fuel cell system includes the safety element. The proposed clean air duct with a safety element is intended for filtering cathode air of a fuel cell system and preventing damage to the fuel cell system that can occur due to the entry of acidic water.

According to a further aspect of the embodiments a cathode air filter of a fuel cell system includes a clean air duct and the safety element. The proposed cathode air filter of a fuel cell system with a clean air duct comprising a safety element may be used for providing clean air to the cathode of the fuel cell system preventing damage to the fuel cell system that can occur due to the entry of acidic water.

### Brief Description of Drawings

The embodiments together with the above-mentioned and other objects and advantages may best be understood from the following detailed description of the embodiments.
Figures 1, 2 and 3 show a safety element, in particular of a clean air duct of a cathode air filter of a fuel cell system, according to an aspect of the embodiments, in different states of interaction with water.
Figures 4, 5 and 6 show a safety element according to a further aspect of the embodiments, in different states of interaction with water.
Figures 7 and 8 show a safety element according to a further aspect of the embodiments, in different states of interaction with water.

### Description of Embodiments

In the drawings, like elements are referred to with equal reference numerals. The drawings are merely schematic representations, not intended to portray specific parameters of the embodiments. Moreover, the drawings are intended to depict only the typical embodiments and therefore should not be considered as limiting the scope of the embodiments.

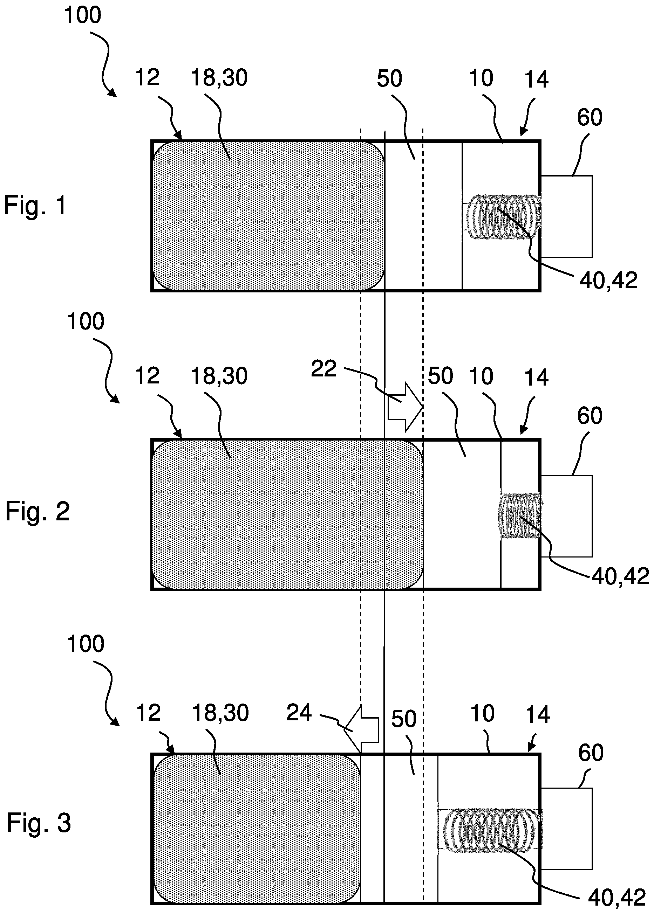

Figures 1-3 depict a safety element 100, in particular of a clean air duct of a cathode air filter of a fuel cell system, according to an aspect of the embodiments, in different states of interaction with water.

The safety element 100 comprises a housing 10, which may be disposed in a, not shown, clean air duct of a cathode air filter of a fuel cell system. In embodiments, the housing 10 may include a flexible, water-permeable casing.

In a first segment 12 of the housing 10 a filler material 18 is disposed and is configured to remove acidic or non-acidic water. The filler material 18 has a volume depending on an interaction with water when exposed to water or not exposed to water.

In this first embodiment the filler material 18 may be an ion exchange resin 30 of a first type, in particular an OH- ion exchange material, which shrinks when OH- ions are exchanged with Cl- ions during adsorption of water.

The housing 10 comprises a compressible element 40 disposed in a second segment 14 of the housing 10 as well as a piston 50 interposed between the filler material 18 and the compressible element 40 and a sensor 60 configured to sense a movement of the piston 50 when the filler material 18 changes its volume. The piston 50 may be configured as some element that allows a movement of the filler material 18.

The sensor 60 further indicates a replacement of the filler material 18 when the movement of the piston 50 is sensed and is greater than or equal to a defined threshold value. For this purpose, the sensor 60 comprises optical and/or electronic means for indicating the movement of the piston 50 and/or the replacement of the filler material 18. Thus, replacement of the filler material 18 may be indicated outside the housing 10 by optical signaling or by a message in some electronic system of the vehicle or the fuel cell system.

Exceeding the defined threshold value in this sense means exceeding the threshold value when a value equal or larger than the threshold value satisfies a desired condition or falling below the threshold value when a value equal or smaller than the threshold value satisfies a desired condition.

The compressible element 40 is a spring element 42, that is loaded in an initial state of the filler material 18.

Thus, in an original state, which is shown in Figure 1, the filler material 18 is in its original volume as freshly filled into the housing 10. The piston 50 presses the preloaded spring element 42 against the sensor 60.

In Figure 2, the safety element 100 is depicted in a first state, where an expansion 22, symbolized by the arrow, takes place due to an uptake of water. The volume increase may differ depending on a type of resin used. The spring element 42 is further loaded and pushed against the sensor 60 which may sense the expansion of the filler material 18.

Figure 3 depicts the safety element 100 in a second state, where a shrinkage 24, symbolized by the arrow, takes place due to Cl- ions being exchanged by OH- ions. The volume decrease, possibly more than 15%, may differ depending on a type of resin used. The spring element 42 is deloaded and released from the sensor 60 which may sense the shrinkage 24 of the filler material 18.

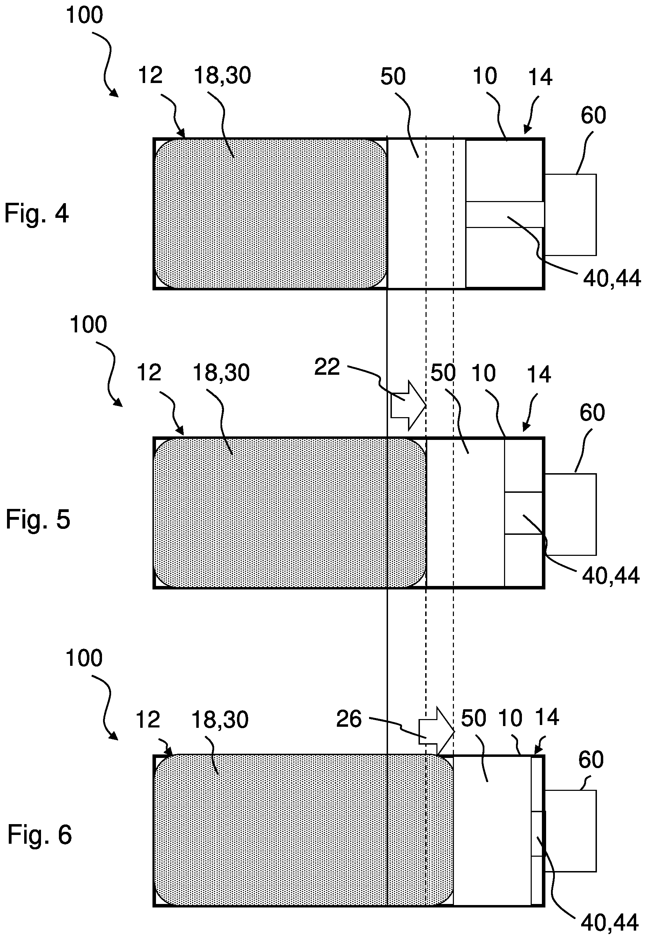

Figures 4-6 depict a safety element 100 according to a further aspect of the embodiments, in different states of interaction with water.

In this second embodiment the filler material 18 may be an ion exchange resin 30 of a second type, in particular an HCO3- ion exchange material, which swells when HCO3-ions are exchanged with Cl- ions during adsorption of water.

The compressible element 40 is a non-woven element 44, that is loaded in an initial state of the filler material 18.

Thus, in an original state, which is shown in Figure 4, the filler material 18 is in its original volume as freshly filled into the housing 10. The piston 50 presses the preloaded non-woven element 44 against the sensor 60.

In Figure 5, the safety element 100 is depicted in a first state, where an expansion 22, symbolized by the arrow, takes place due to an uptake of water. The volume increase may differ depending on a type of resin used. The non-woven element 44 is further loaded and pushed against the sensor 60 which may sense the expansion of the filler material 18.

Figure 6 depicts the safety element 100 in a second state, where a further expansion 26, symbolized by the arrow, takes place due to Cl- ions being exchanged by HCO3-ions. The volume increase, possibly more than 15%, may differ depending on a type of resin used. The non-woven element 44 is further loaded and pushes against the sensor 60 which may sense the further expansion 26 of the filler material 18.

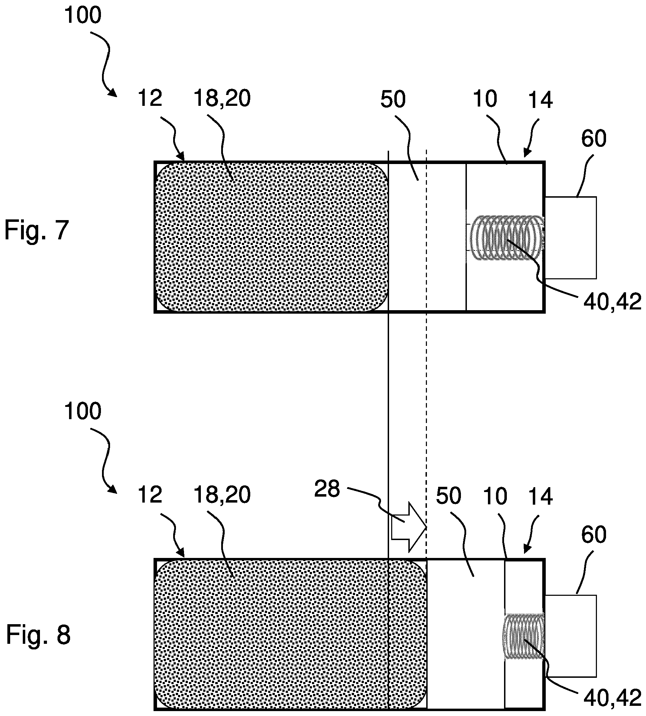

Figures 7 and 8 depict a safety element 100 according to a further aspect of the embodiments, in different states of interaction with water.

In this third embodiment the filler material 18 may be a superadsorber 20, which swells during adsorption of water. In embodiments, the superadsorber 20 may comprise a superabsorbent polymer (SAP) including water-absorbing hydrophilic homopolymers or copolymers that can absorb and retain a liquid.

The compressible element 40 is a spring element 42, that is loaded in an initial state of the filler material 18.

In an original state, which is shown in Figure 7, the filler material 18 is in its original volume as freshly filled into the housing 10. The piston 50 presses the preloaded spring element 42 against the sensor 60.

In Figure 8, the safety element 100 is depicted in a state, where an expansion 28, symbolized by the arrow, takes place due to an uptake of water. The spring element 42 is further loaded and pushed against the sensor 60 which may sense the expansion of the filler material 18.

Additionally, the superadsorber 20 may favorably comprise an anion exchange material.

The safety element 100 shown, may advantageously be part of a clean air duct of a cathode air filter of a fuel cell system.

Optionally, the safety element 100 may also be part of a cathode air filter of a fuel cell system with a clean air duct.

### Reference Signs List

- 10: housing
- 12: first segment
- 14: second segment
- 18: filler material
- 20: superadsorber
- 22: expansion
- 24: shrinkage
- 26: expansion
- 28: expansion
- 30: ion exchange resin
- 40: compressible element
- 42: spring
- 44: non-woven
- 50: piston
- 60: sensor
- 100: safety element

## Claims

1. A safety element (100) comprising:
a housing (10); and
a filler material (18) comprising a superadsorber (20) and/or an ion exchange resin (30) disposed in a first segment (12) of the housing (10) and configured to remove acidic or non-acidic water, the filler material (18) having a volume depending on an interaction with water when exposed to water or not exposed to water.

2. The safety element (100) according to claim 1, further comprising a compressible element (40) disposed in a second segment (14) of the housing (10).

3. The safety element (100) according to claim 2, further comprising a piston (50) interposed between the filler material (18) and the compressible element (40).

4. The safety element (100) according to claim 3, further comprising a sensor (60) configured to sense a movement of the piston (50) when the volume of the filler material (18) changes, and to indicate a replacement of the filler material (18) when the movement of the piston (50) is sensed and is greater than or equal to a defined threshold value.

5. The safety element according to claim 4, wherein the sensor (60) comprises optical and/or electronic means for sensing the movement of the piston (50) and/or for indicating the replacement of the filler material (18).

6. The safety element according to any one of claims 4 and 5, wherein the sensor (60) is configured to indicate the replacement of the filler material (18) outside the housing (10).

7. The safety element according to claim 2, wherein the compressible element (40) is a spring element (42).

8. The safety element according to claim 2, wherein the compressible element (40) is a non-woven element (44).

9. The safety element according to any one of claims 2, 7 and 8, wherein the compressible element (40) is loaded in an initial state of the filler material (18).

10. The safety element according to any one of claims 1 to 9, wherein the superadsorber (20) comprises an anion exchange material.

11. The safety element according to any one of claims 1 to 10, wherein the ion exchange resin (30) comprises an OH- ion exchange material.

12. The safety element according to any one of claims 1 to 10, wherein the ion exchange resin (30) comprises an HCO3- ion exchange material.

13. A clean air duct of a cathode air filter of a fuel cell system, the clean air duct comprising the safety element (100) according to any one of claims 1 to 12.

14. A cathode air filter of a fuel cell system, the cathode air filter comprising:
a clean air duct; and
the safety element (100) according to any one of claims 1 to 12, the safety element (100) being disposed in the clean air duct.
